# EUROPEAN PATENT APPLICATION

(11) **EP 2 801 945 A1**
(43) Date of publication of application: **12.11.2014**
(21) Application number: 12864446.5
(22) Date of filing: 31.12.2012
(51) Int. Cl.: G06Q 30/06

(54) **MOBILE GROUP-BUYING METHOD, PLATFORM AND MACHINE READABLE STORAGE MEDIUM**

(30) Priority: 06.01.2012 CN 201210002896
(71) Applicant: Tencent Technology Shenzhen Company Limited, Shenzhen, Guangdong 518044 (CN)
(72) Inventor: SUN, Liang, Shenzhen Guangdong 518044 (CN); DENG, Huifang, Shenzhen Guangdong 518044 (CN)
(74) Representative: Eisenführ Speiser
(86) International application number: PCT/CN2012/087974
(87) International publication number: WO 2013/102422

(57) **Abstract**

Disclosed are a mobile group-buying method, comprising: a location-based service (LBS) platform receiving a group forming request initiated by any mobile user; and the LBS platform sending a group forming invitation to a mobile user whose geographical location meets a requirement, recording a mobile user who accepts the invitation, and when the number of the recorded mobile users reaches a preset threshold, launching a corresponding group-buying service. Further disclosed is a mobile group-buying platform. The solution is capable of enhancing the accuracy of information pushing.

## Description

### CROSS-REFERENCES TO RELATED APPLICATIONS

This application claims the priority of Chinese Patent Application No. 201210002896.8, entitled "MOBILE GROUP-BUYING METHOD AND MOBILE GROUP-BUYING PLATFORM", filed with State Intellectual Property Office of PRC on January 6, 2012, which is incorporated herein by reference in its entirety.

### FIELD OF THE INVENTION

The present disclosure relates to a group-buying technology, and particularly to a mobile group-buying method, a mobile group-buying platform and a machine readable storage medium.

### BACKGROUND OF THE INVENTION

A mobile group-buying refers to a behavior of buying in a group by mobile users through mobile internet. The so-called group-buying refers to buying in a group, that is, a manner of buying that people who know or do not know each other join together to boost up a bargaining power with the merchants and thereby an optimal price is achieved.

### SUMMARY OF THE INVENTION

A mobile group-buying method is provided according to an embodiment of the present disclosure, which may improve the accuracy for pushing information.

A mobile group-buying platform is further provided according to an embodiment of the present disclosure, by which the accuracy for pushing information can be improved.

The mobile group-buying method including:
receiving, by a Location-Based Service (LBS) platform, a group-forming request initiated by a mobile user; and
sending, by the LBS platform, a group-forming invitation to mobile users whose geographical locations meet a requirement, recording mobile users who accept the group-forming invitation, and launching a corresponding group-buying service in the case where the number of the recorded mobile users reaches a predetermined threshold.

A mobile group-buying platform, with the platform being a location-based service (LBS) platform, which includes:
a transceiver module, configured to receive a group-forming request initiated by a mobile user and send a group-forming invitation to mobile users whose geographical locations meet a requirement; and
a group-buying module, configured to record mobile users who accept the invitation, and launch a corresponding group-buying service in the case where the number of the recorded mobile users reaches a predetermined threshold.

According to the technical solution of the embodiments of the present disclosure, after logging on the platform, the mobile users can initiate a group-forming request if there is no desired group-buying service. Accordingly, other mobile users whose geographical locations meet a requirement will be invited by the LBS platform to form a group with the mobile user who initiates the request. Once the group-forming is accomplished, a corresponding group-buying service is launched. Thus, the purpose that the corresponding group-buying service is launched in pertinency according to the actual requirements of mobile users is achieved. That is, the accuracy for pushing information is improved. Also, the technical solution according to the embodiments of the present disclosure is convenient for implementation, popularization and promotion.

### BRIEF DESCRIPTION OF THE DRAWINGS

Figure 1 is a flowchart of a mobile group-buying method according to an embodiment of the present disclosure;
Figure 2 is a schematic structural diagram of a mobile group-buying platform according to an embodiment of the present disclosure; and
Figure 3 is a schematic structural diagram of a mobile group-buying platform according to an embodiment of the present disclosure.

### DETAILED DESCRIPTION OF THE INVENTION

An existing mobile group-buying is mainly implemented in such a manner that a provider of a group-buying platform centralize offline resources and develop merchants, so as to launch group-buying services by negotiation, and after the mobile users see the launched group-buying services on the group-buying platform, they can choose whether to participate in the group-buying as required.

However, in practice, some problems exist in the implementation described above. Since the mobile users can only select in the launched group-buying services passively, they can not request initiatively the providers of the group-buying platform to launch a corresponding group-buying service. Thus, the following situations will be caused: in the case where the mobile user has a group-buying demand, but a corresponding group-buying service is not provided on the group-buying platform, the mobile user can not perform this group-buying; or in the case where a corresponding group-buying service is provided on the group-buying platform, the mobile user can not perform this group-buying due to the geographical location. That is to say, the information provided by the group-buying platform is not accurate enough for the mobile user.

For problems existed in the prior art, a mobile group-buying solution is provided according to the embodiments of the present disclosure, and the solution is implemented based on a Location-Based Service (LBS) platform.

LBS is a value-added service which is achieved through such a manner that information on geographical locations of the mobile users (mobile terminal) is obtained by a radio communication network or external positioning of telecommunications mobile operators, so as to provide a service to the mobile users under the support of Geographic Information System (GIS) platform. The radio communication network may be a Global System of Mobile communication (GSM) network, a Code Division Multiple Access (CDMA) network, or the like. The external positioning may be a Global Positioning System (GPS) or the like. And the geographical locations may be geographic coordinates, geodetic coordinates or the like.

For making the technical solutions of the present disclosure to be more clear and apparent, in the following, the solutions of the present disclosure will be further described in conjunction with the accompany drawings and the embodiments.

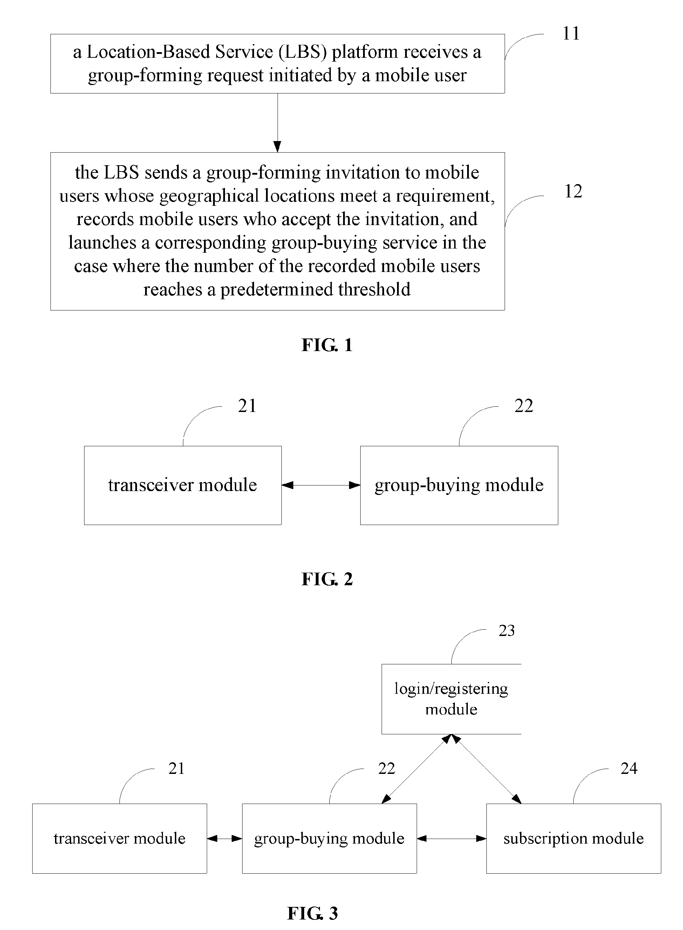

Figure 1 is a flowchart of a mobile group-buying method according to an embodiment of the present disclosure. As shown in Figure 1, the method includes the following steps.

Step 11: a Location-Based Service (LBS) platform receives a group-forming request initiated by a mobile user.

A mobile user which initiates a group-forming request may be denoted by a mobile user X for being distinguished from mobile users which occur in the following. A mobile terminal used by the mobile user X may be a mobile phone, a mobile PC, a personal digital assistant (PDA) or the like. The mobile user X may interact with the LBS platform by the mobile terminal.

After registering and logging on the LBS platform, the mobile user X may firstly inquire whether a desired group-buying service exists. It is not necessary to initiate the group-forming request in the case where the desired group-buying service exists, and the following steps are omitted.

In practice, retrieving may be carried out by the mobile user X using the retrieving function provided by the LBS platform. That is, a retrieving keyword is input. After the retrieving keyword input by the mobile user X is received by the LBS platform, a group-buying service is displayed to the mobile user X if the group-buying service matching with the retrieving keyword is retrieved. And the mobile user X can participate in this group-buying service directly. Accordingly, the LBS platform assists the mobile user X to complete this group-buying service in terms of completing a mobile payment, recording the payment and so on. After that, the mobile user X can also appraise the merchants after completing this group-buying service. Herein, the mobile payment refers to business transaction that is implemented via a mobile communication network by counter parties for some goods or services using the mobile terminal as a carrier.

If the desired group-buying service does not exist, the mobile user X can initiate a group-forming request by which at least a merchant name and a group-buying content, such as a certain cinema in Beijing, a movie ticket of a certain movie or the like, are needed to be carried. How to initiate the group-forming request is not limited. For example, a window for initiating may be provided by the LBS platform to the mobile users, which is used to input a merchant name, a group-buying content and the like. After the input is completed, click OK, and the request is sent out.

Step 12: the LBS sends a group-forming invitation to mobile users whose geographical locations meet a requirement, records mobile users who accept the invitation, and launching a corresponding group-buying service in the case where the number of the recorded mobile users reaches a predetermined threshold.

After receiving the group-forming request initiated by the mobile user X, the LBS platform sends the group-forming invitation to the mobile users whose geographical locations meet a requirement, with at least a merchant name and a group-buying content being carried by the group-forming invitation, and recording mobile users who accept the invitation.

After a mobile user registers on the LBS platform, information about their geographical location is obtained by the LBS platform. How to obtain the information of the geographical location belongs to the prior art. Thus, it is quite convenient for the LBS platform to find out the mobile users whose geographical locations meet a requirement, and the group-forming invitation carrying at least a merchant name and a group-buying content is sent to the found mobile users in a manner of short messages or broadcast. If a mobile user who receives the invitation would like to participate in the group-buying, a message for confirming may be returned to the LBS platform. Or else, a message for denying may be returned to the LBS platform, or no message is returned.

A mobile user whose geographical location meets a requirement may refer to a mobile user who is geographically near to the merchant. Specifically, the mobile user who is geographically near to the merchant may be the mobile user who is located in a same geographical region as the merchant. For example, the mobile user and the merchant are all located in Haidian District of Beijing; or the mobile user, who has a distance less than a predetermined threshold from the merchant.

In addition, in practice, the users may prefer to perform group-forming with people that they know. Thus, after initiating the group-forming request, the mobile user X may send the group-forming invitation to his friends through ordinary short messages or using a short message interface provided by the LBS platform, when the group-forming invitation is sent by the LBS platform to mobile users whose geographical locations meet a requirement. Likewise, at least a merchant name and a group-buying content are carried by the group-forming invitation. If his friends accept the invitation, they may request initiatively to participate in the group-buying after logging on the LBS platform. If they have not registered, they need to register firstly, and the mobile users who request initiatively to participate in the group-buying are recorded by the LBS platform.

In the case where the number of the recorded mobile users reaches a predetermined threshold, that is, the requirement of group-forming is met or the group-forming is accomplished, the corresponding group-buying service is launched by the LBS platform through negotiation with the merchants. If the invitation is sent only by the LBS platform, the number of the recorded mobile users refers only to the number of the mobile users who accept the invitation sent by the LBS platform. If the invitation is sent by the mobile user X and the LBS platform, the number of the recorded mobile users refers to the sum of the number of the mobile users who accept the invitation sent by the LBS platform and the number of the mobile users who accept the invitation sent by the mobile user X.

In general, information of a valid period is further carried by the group-forming request. Accordingly, the specific implementation of step 12 may include: the LBS platform sends the group-forming invitation to the mobile users whose geographical locations meet the requirement and who do not accept the invitation at each predetermined time during the valid period, records mobile users who accept the invitation, and records mobile users who request initiatively to participate in the group-buying during the valid period as well.

If the group-forming is accomplished, the LBS platform will inform the mobile user X. How to complete the group-buying service in the later stage belongs to the prior art. If the group-forming is not accomplished, the LBS platform will also inform the mobile user X, and may consult the mobile user X how to deal with the group-buying in the later stage, for example, whether to abandon the group-forming or to extend the valid period, or the like. If the mobile user X confirms to extend the valid period, the LBS platform will continue to perform sending the invitation and recording.

By way of example, assuming that the valid period set by the mobile user X is seven days, the group-forming invitation may be sent, by the LBS platform, to the mobile users whose geographical locations meet the requirement at a certain predetermined time of the day on which the valid period is set, and the mobile users who accept the invitation are recorded. And, at the same time in the next day, the group-forming invitation is sent to the mobile users whose geographical locations meet the requirement and who do not accept the invitation by the LBS platform, and the mobile users who accept the invitation are recorded, and so on. If the number of the recorded mobile users (assuming that the number of mobile users who accept the invitation sent by the mobile user X is included) reaches the predetermined threshold after seven days, the mobile user X is informed of the group-forming being accomplished.

A specific value of the predetermined threshold described above can be determined as required.

For the mobile user X, he may also receive an invitation sent by other mobile users or the LBS platform. After logging on the LBS platform and viewing the invitation, the mobile user X can return a message for confirming or a message for denying according to his requirement.

Furthermore, after logging on the LBS platform, the mobile user X may also share the information of the merchants around him, in a manner of related text, pictures, videos or the like, with other mobile users. For the merchants, after registering and logging on the LBS platform, they can pay attention at any time to the information shared by the mobile users, the appraise made by the mobile users after the group-buying is completed, other related information and the like. Thereby, the potential requirement of the users can be mined, and the corresponding group-buying service is launched in time.

Up to this point, the embodiment of the method shown in Figure 1 ends. According to the method of the embodiment, after logging on an LBS platform, a mobile user can initiate a group-forming request if there is no desired group-buying service. Accordingly, mobile users whose geographical locations meet a requirement will be invited by the LBS platform to form a group with the mobile user who initiates the request. Once the group-forming is accomplished, a corresponding group-buying service is launched. Thus, the purpose of launching the corresponding group-buying service pertinent to the actual requirement of the mobile users is achieved. That is, the accuracy for pushing information is improved.

A subscription mechanism may be further provided based on the embodiment of the method shown in Figure 1. The subscription mechanism may be implemented as follows.
1) The LBS platform receives group-buying demand information set by the mobile user X, retrieves periodically a group-buying service matching with the group-buying demand information and the geographical location of the mobile user X, and sends the retrieved group-buying service to the mobile user X, so that the mobile user X is able to know the newest group-buying service launched by the merchants timely, herein the group-buying service matches with the geographical location may refer to the merchant is geographically near to the mobile user X.
2) The LBS platform receives information for an available group-buying service set by a merchant, retrieves periodically group-buying demand information matching with the information for the available group-buying service, and sends the retrieved group-buying demand information to the merchant, so that the merchant is able to know the newest requirements of the mobile users timely, and the corresponding group-buying service is launched in time. In the case where the number of the mobile users who have a certain group-buying requirement is larger, the group-buying service corresponding to the group-buying demand may be launched.

In general, either of the group-buying demand information and the information for an available group-buying service described above consists of a series of keywords. Also, the information for an available group-buying service and the group-buying demand information described above may be sent, by E-mail, to the mail box provided by the mobile users and the merchant when registering on the LBS platform. A time interval between sending the E-mail can be set as required, for example, 24 hours.

With the subscription mechanism, the mobile users are able to know the newest group-buying service launched by the merchant timely, and the merchant is able to know the newest requirements of the mobile users timely, thereby the corresponding group-buying service is launched in time.

Figure 2 is a schematic structural diagram of a mobile group-buying platform according to an embodiment of the present disclosure, and the platform is the aforementioned LBS platform. As shown in Figure 2, the mobile group-buying platform includes a transceiver module 21 and a group-buying module 22.

The transceiver module 21 is configured to receive a group-forming request initiated by a mobile user and send a group-forming invitation to a mobile user whose geographical location meets a requirement.

The group-buying module 22 is configured to record mobile users who accept the invitation, and launch a corresponding group-buying service in the case where the number of the recorded mobile users reaches a predetermined threshold.

Likewise, a mobile user who initiates the group-forming request is denoted by a mobile user X for being distinguished from mobile users which occur in the following.

Figure 3 is a schematic structural diagram of a mobile group-buying platform according to an embodiment of the present disclosure. As shown in Figure 3, the mobile group-buying platform shown in Figure 2 may further include a logining/registering module 23, which is configured to support the mobile users and a merchant to register and login on the platform.

Herein the transceiver module 21 is further configured to receive a retrieving keyword input by the mobile user who initiates the group-forming request.

The group-buying module 22 is further configured to performing retrieving according to the retrieving keyword, and display a group-buying service to the mobile user X if the group-buying service matching with the retrieving keyword is retrieved. After that, in the case where the mobile user X participates in the group-buying, the LBS platform may be assist the mobile user X to complete the group-buying in terms of completing a mobile payment, recording the payment and supporting the mobile user X in appraising the merchants after the group-purchasing is completed.

At least a merchant name and a group-purchasing content are carried by the group-forming request and the group-forming invitation.

Herein, the mobile users whose geographical location meets the requirement include mobile users who are geographically near to the merchant, with the mobile users who are geographically near to the merchant including a mobile user who is located in a same geographical region as the merchant, or a mobile user, who has a distance less than a predetermined threshold from the merchant.

The group-buying module 22 is further configured to record mobile users who request initiatively to participate in the group-buying as well as record mobile users who accept the invitation, with the mobile users who request initiatively to participate in the group-buying being the friends of the mobile user X who accept the group-forming invitation sent by the mobile user X.

In addition, a valid period is further carried by the group-forming request. The group-forming invitation is sent, by the group-buying module, to the mobile users whose geographical locations meet the requirement and who do not accept the invitation at each predetermined time during the valid period, and mobile users who accept the invitation are recorded, and mobile users who request initiatively to participate in the group-buying during the valid period are recorded as well.

The mobile group-buying platform shown in Figure 3 may further include a subscription module 24.

The subscription module 24 is configured to receive group-buying demand information set by the mobile user X, retrieve periodically a group-buying service matching with the group-buying demand information and the geographical location of the mobile user X, and send the retrieved group-buying service to the mobile user X.

The subscription module 24 is further configured to receive information for an available group- service set by the a merchant, retrieve periodically the group-buying demand information matching with the information for an available group-buying service, and send the retrieved group-buying demand information to the merchant.

In additional to the functions described above, the mobile group-buying platform shown in Figure 3 further has some other functions, for example, a function for supporting the mobile user in sharing information of the merchants, a function for informing the mobile users of the result whether the group-purchasing is accomplished, and the like.

The specific workflow of the mobile group-buying platform shown in the Figure 3, is explained in the corresponding description in the embodiment of the method shown in Figure 1, which is not described here.

The modules of the LBS platform described above may be implemented by software (such as machine-readable instructions stored in a memory and executed by a processor), hardware (such as a processor of an Application Specific Integrated Circuit (ASIC)), or a combination of software and hardware, which is not limited to the embodiments of the present disclosure.

It can be understood by those skilled in the art that all or part of the flow for achieving the method of the above-described embodiments may be accomplished by instructing related hardware via a program. The program may be stored in a computer-readable storage medium, and the program may include the flows of the embodiment of the methods described above when executing this program. The storage medium may include a diskette, an optical disk, a read-only memory (ROM), a random access memory (RAM) or the like.

The above-described are merely the preferred embodiments of the disclosure, which are not intended to limit the disclosure. Any possible modifications, equivalent alternations and improvements made within the spirit and the principle of the disclosure will fall within the protection scope of the disclosure.

## Claims

1. A mobile group-buying method, comprising:
receiving, by a Location-Based Service (LBS) platform, a group-forming request initiated by a mobile user; and
sending, by the LBS platform, a group-forming invitation to mobile users whose geographical locations meet a requirement, recording mobile users who accept the group-forming invitation, and launching a corresponding group-buying service in the case where the number of the recorded mobile users reaches a predetermined threshold.

2. The method according to claim 1, wherein before the receiving, by an LBS platform, a group-forming request initiated by a mobile user, the method further comprises:
registering and logining on the LBS platform by the mobile users and a merchant; and
receiving, by the LBS platform, a retrieving keyword input by the mobile user who initiates the group-forming request, performing retrieving according to the retrieving keyword, and displaying a group-buying service to the mobile user who initiates the group-forming request in the case where the group-buying service matching with the retrieving keyword is retrieved.

3. The method according to claim 1, wherein at least a merchant name and a group-buying content are carried by the group-forming request; and/or
at least the merchant name and the group-buying content are carried by the group-forming invitation.

4. The method according to claim 3, wherein the mobile users whose geographical locations meet the requirement comprise mobile users who are geographically near to the merchant; the mobile users who are geographically near to the merchant comprises: a mobile user who are located in a same geographical region as the merchant, or a mobile user who has a distance less than a predetermined threshold from the merchant.

5. The method according to claim 3, wherein when recording mobile users who accept the invitation, the method further comprises:
recording mobile users who request initiatively to participate in the group-buying service,
wherein the mobile users who request initiatively to participate in the group-buying service are mobile users who accept the group-forming invitation sent by the mobile user who initiates the group-forming request.

6. The method according to claim 5, wherein a valid period is further carried by the group-forming request,
wherein the sending, by the LBS platform, a group-forming invitation to mobile users whose geographical locations meet the requirement and recording mobile users who accept the invitation comprises:
sending, by the LBS platform, the group-forming invitation to the mobile users whose geographical locations meet the requirement and who do not accept the invitation at each predetermined time during the valid period, and recording mobile users who accept the invitation, and
the recording mobile users who request initiatively to participate in the group-buying service comprises: recording mobile users who request initiatively to participate in the group-buying service during the valid period.

7. The method according to any one of claims 1 to 6, further comprising:
receiving, by the LBS platform, group-buying demand information set by the mobile user who initiates the group-forming request, retrieving periodically a group-buying service matching with the group-buying demand information and the geographical location of the mobile user who initiates the group-forming request, and sending the retrieved group-buying service to the mobile user who initiates the group-forming request.

8. The method according to claim 7, further comprising:
receiving, by the LBS platform, information for an available group-buying service set by the merchant, retrieving periodically group-buying demand information matching with the information for the available group-buying service, and sending the retrieved group-buying demand information to the merchant.

9. A mobile group-buying platform which is a Location-Based Service (LBS) platform, comprising:
a transceiver module, configured to receive a group-forming request initiated by a mobile user and send a group-forming invitation to mobile users whose geographical locations meet a requirement; and
a group-buying module, configured to record mobile users who accept the invitation, and launch a corresponding group-buying service in the case where the number of the recorded mobile users reaches a predetermined threshold.

10. The platform according to claim 9, further comprising:
a logining/registering module, configured to support the mobile users and a merchant to register and login on the platform,
wherein the transceiver module is further configured to receive a retrieving keyword input by the mobile user who initiates the group-forming request; and
the group-buying module is further configured to performing retrieving according to the retrieving keyword, and display a group-buying service to the mobile user who initiates the group-forming request in the case where the group-buying service matching with the retrieving keyword is retrieved.

11. The platform according to claim 9, wherein at least a merchant name and a group-buying content are carried by the group-forming request; and/or
at least the merchant name and the group-buying content are carried by the group-forming invitation.

12. The platform according to claim 11, wherein the mobile users whose geographical locations meet the requirement comprise mobile users who are geographically near to the merchant, and the mobile users who are geographically near to the merchant comprises: a mobile user who is located in a same geographical region as the merchant, or a mobile user who has a distance less than a predetermined threshold from the merchant.

13. The platform according to claim 11, wherein the group-buying module is further configured to record mobile users who request initiatively to participate in the group-buying service as well as record mobile users who accept the invitation, and the mobile users who request initiatively to participate in the group-buying service are mobile users who accept the group-forming invitation sent by the mobile user who initiates the group-forming request.

14. The platform according to claim 13, wherein in the case where a valid period is further carried by the group-forming request;
the group-forming module is configured to send the group-forming invitation to the mobile users whose geographical locations meet the requirement and who do not accept the invitation at each predetermined time during the valid period, record mobile users who accept the invitation, and record mobile users who request initiatively to participate in the group-buying service during the valid period.

15. The platform according to any one of claims 9 to 14, further comprising:
a subscription module, configured to receive group-buying demand information set by the mobile user who initiates the group-forming request, retrieve periodically a group-buying service matching with the group-buying demand information and the geographical location of the mobile user who initiates the group-forming request, and send the retrieved group-buying service to the mobile user who initiates the group-forming request.

16. The platform according to claim 15, wherein the subscription module is further configured to receive information for an available group-buying service set by the merchant, retrieve periodically the group-buying demand information matching with the information for an available group-buying service, and send the retrieved group-buying demand information to the merchant.

17. A machine-readable storage medium on which a set of instructions are stored, wherein the mobile group-buying method according to any one of claims 1 to 8 is performed by the machine when the set of instructions are executed.
